# FASCICULE DE BREVET EUROPEEN

(11) **EP 4 313 886 B1**
(45) Date de publication et mention de la délivrance du brevet: **15.10.2025**
(21) Numéro de dépôt: 22716083.5
(22) Date de dépôt: 28.03.2022
(51) Int. Cl.: C03B 5/43, F27D 1/16

(54) **PROCEDE DE REPARATION D'UNE CUVE DE FOUR DE FUSION DE VERRE**
VERFAHREN ZUR REPARATUR EINES TANKS IN EINEM GLASSCHMELZOFEN
METHOD FOR REPAIRING A TANK IN A GLASS MELTING FURNACE

(30) Priorité: 29.03.2021 FR 2103200
(43) Date de publication de la demande: 07.02.2024
(73) Titulaire: SAINT-GOBAIN CENTRE DE RECHERCHES ET D'ETUDES EUROPEEN, 92400 Courbevoie (FR)
(72) Inventeur: LINNOT, Cyril, 69003 LYON (FR); CONSALES, Thierry, Claude, 84210 PERNES LES FONTAINES (FR); CHAMPION, Thibault, 84530 VILLELAURE (FR)
(74) Mandataire: Ipsilon
(86) Numéro de dépôt international: PCT/EP2022/058126
(87) Numéro de publication internationale: WO 2022/207555

(56) Documents cités:
- EP-B1- 3 268 328
- "74th Conference on Glass Problems : Sundaram/74th Conference", 28 April 2014, JOHN WILEY & SONS, INC., Hoboken, NJ, USA, ISBN: 978-1-118-93297-1, article SANCHEZ FRANCO S. CRISTINA ET AL: "Hot Bottom Repairs: Global Impact, Performance Case Study and Development for the Americas", pages: 163 - 175, XP055864388, DOI: 10.1002/9781118932964.ch16

## Description

### Domaine technique

La présente invention est relative à un procédé de réparation d'une cuve d'un four de fusion de verre.

### Art antérieur

L'industrie du verre utilise généralement, pour la construction de ses fours, des produits réfractaires fondus et coulés, ou obtenus par frittage, très résistants à la corrosion par le verre en fusion, et se présentant sous la forme de blocs ou de dalles.

Le verre en fusion est très corrosif et les produits réfractaires, en particulier ceux constituant la cuve de fusion, subissent une usure importante, pouvant conduire à la création de fuites de verre en fusion. Ces fuites sont dangereuses et peuvent entraîner un arrêt du four.

Afin d'augmenter la durée de vie du four, le verrier peut être amené à réaliser des réparations à chaud. Une réparation à chaud permet avantageusement de limiter considérablement la durée d'interruption de l'exploitation du four.

EP 3 268 328 B1 décrit un produit pour réparer des fours de fusion de verre ainsi qu'un procédé de réparation à chaud d'une région d'un four de fusion de verre, en particulier la sole. Un procédé de réparation à chaud de soles de fours verriers est étudié dans S. Cristina Sánchez Franco et al. "Hot Bottom Repairs: global impact, performance case study and development for the Americas" (74th Conference on Glass Problems").

EP 0 739 861 B1 décrit également un procédé pour réparer des fours de fusion de verre. Suivant ce procédé, des couches d'un produit de réparation sont superposées dans les régions à remplir.

Par ailleurs, des produits sont également utilisés pour réparer des fours d'élaboration de métaux. Les contraintes mécaniques dans cette application sont cependant très différentes de celles rencontrées dans l'application à un four de verrerie. Les conditions de corrosion des fours par un verre ou par un métal en fusion sont également très différentes. Enfin, certaines impuretés, tolérées dans les fours d'élaboration des métaux, sont inacceptables pour la fabrication de verre. En particulier, les matériaux réfractaires utilisés dans les fours de verrerie ne doivent pas générer de lâcher de pierres par morcellement, ni produire de bulles. Un produit de réparation destiné à un four d'élaboration de métaux n'est donc pas, *a priori*, utilisable pour un four de verrerie, en particulier dans une zone en contact avec le verre en fusion.

Avec les procédés actuels, la région réparée reste fragile. La durée de vie de la cuve est donc limitée.

Il existe ainsi un besoin permanent pour des solutions permettant d'allonger la vie de la cuve réparée. La présente invention vise à satisfaire, au moins partiellement, ce besoin.

### Résumé de l'invention

L'invention propose un procédé de réparation à chaud d'une région d'une cuve d'un four de verrerie, dite « région à réparer », au moyen d'un produit de réparation, ledit procédé comportant les étapes suivantes, à une température supérieure à 300°C, de préférence supérieure à 400°C, de préférence supérieure à 500°C, de préférence supérieure à 600°C, de préférence supérieure à 700°C, de préférence supérieure à 800°C, de préférence supérieure à 900°C, et de préférence inférieure à 1350°C, de préférence inférieure à 1300°C :
a) définition d'un espace de réception dans la région à réparer, dit « région à remplir », la région à remplir comportant un fond ;
b) nappage dudit fond, la durée du nappage, depuis le début de l'introduction du produit de réparation dans la région à remplir jusqu'à l'instant où ledit fond est complètement recouvert par du produit de réparation, étant inférieure à 14 minutes ;
c) remplissage, de préférence par coulage, de la région à remplir avec le produit de réparation, la vitesse de montée du produit de réparation dans la région à remplir étant, à tout instant pendant ladite étape de remplissage, supérieure ou égale à 3 mm/min.

A l'étape c), tout volume élémentaire de la région à remplir considéré, par exemple tout volume cubique de 1 cm de côté, est ainsi rempli à une vitesse de montée supérieure ou égale à 3 mm/min.

Comme on le verra plus en détail dans la suite de la description, le procédé de réparation selon l'invention permet, de manière surprenante, d'obtenir un allongement de la durée de vie de la région de la cuve réparée. En particulier, les inventeurs ont découvert qu'une vitesse de montée et une durée de nappage ainsi contrôlées confèrent à la région réparée une porosité ouverte plus faible et une résistance mécanique, notamment une résistance à la compression, plus élevée qu'avec les procédés antérieurs. Ils ont également découvert que la microstructure de la région réparée suivant un procédé selon l'invention est dépourvue de strates, ce qui pourrait expliquer les performances obtenues.

Dans un souci de clarté, on distingue la région du four nécessitant d'être réparée, ou « région à réparer », et la région qui, à l'étape de remplissage, est remplie de manière contrôlée, c'est-à-dire la « région à remplir ». En effet, si dans un mode de réalisation la région à remplir se confond avec la région à réparer, la région à réparer peut être alternativement cloisonnée afin de définir plusieurs régions à remplir de surfaces plus petites.

Un procédé selon l'invention peut encore comporter une ou plusieurs des caractéristiques optionnelles et préférées suivantes :
- la vitesse de montée varie, pendant ladite étape de remplissage, entre une vitesse minimale et une vitesse maximale, la différence entre ladite vitesse maximale et ladite vitesse de montée minimale étant inférieure à 15 mm/min ;
- la vitesse de montée du produit de réparation est, à tout instant pendant ladite étape de remplissage, supérieure à 7 mm/min, de préférence supérieure à 12 mm/min, et/ou inférieure à 80 mm/min ;
- la durée de l'étape de nappage est de préférence inférieure à 10 minutes, de préférence inférieure à 8 minutes ;
- la région à remplir présente une surface inférieure ou égale à 25 m², de préférence inférieure à 16 m², et/ou une surface supérieure ou égale à 3 m² ;
- à l'étape b) et/ou à l'étape c), de préférence à l'étape b) et à l'étape c), le produit de réparation est introduit dans la région à remplir avec un débit supérieur à 0,02 m³/min et inférieur à 0,60 m³/min ;
- pendant l'étape c) de remplissage, le produit de réparation est acheminé jusqu'à la région à remplir par pompage, de préférence avec une pression d'aspiration inférieure ou égale à 180 bar ;
- la région à remplir est définie
   - par la surface de la cuve dans la région à réparer et/ou
   - par une ou plusieurs cloisons de compartimentation rapportées dans la région à réparer ;
- les cloisons de compartimentation définissent, seules ou en combinaison avec la surface de la cuve dans la région à réparer, une région à remplir incluse dans la région à réparer ;
- à l'étape a), la région à réparer est divisée en une pluralité de compartiments, la région à remplir étant un desdits compartiments ;
- le procédé comporte une pluralité de cycles d'étapes b) et c) afin de remplir chacun desdits compartiments, chaque compartiment constituant une dite région à remplir.

L'invention concerne également un procédé de réparation à chaud d'une cuve contenant initialement un bain de verre en fusion en contact avec la région à réparer comportant les étapes suivantes :
1) vidange, au moins partielle, dudit verre en fusion hors de la cuve, de manière à exposer ladite région à réparer ;
2) de préférence, rinçage de ladite région à réparer ;
3) réduction de la température dans le four ;
4) mise en œuvre des étapes a) à c) ;
5) de préférence, augmentation et maintien de la température du four entre 900°C et 1400°C afin de fritter le produit de réparation ;
6) introduction d'une composition de verre à fondre dans la cuve et augmentation de la température du four jusqu'à une température de fonctionnement conduisant à la fusion de ladite composition.

L'invention concerne également un four de fusion de verre comportant une cuve comportant au moins une région réparée, ladite région réparée étant en un produit, de préférence fritté, présentant une microstructure non-stratifiée.

De préférence, le produit de la région réparée est fritté.

Selon l'invention, le produit fritté de la région réparée présente :
- une porosité ouverte inférieure à 40%, de préférence inférieure à 35%, de préférence inférieure à 30%, et/ou
- une résistance à la compression à froid supérieure à 30 MPa, de préférence supérieure à 40 MPa, de préférence supérieure à 50 MPa, de préférence supérieure à 55 MPa.

### Brève description des figures

D'autres caractéristiques et avantages de l'invention apparaitront encore à l'examen de la description qui va suivre et au regard du dessin annexé dans lequel :
- la figure 1 [Fig 1] représente schématiquement, en perspective, une cuve présentant deux régions à réparer ;
- la figure 2 [Fig 2] représente schématiquement, en perspective, une région à réparer compartimentée ;
- la figure 3 [Fig 3] représente schématiquement, une région à remplir en cours de remplissage.

### Définitions

Par souci de clarté, on distingue le « produit de réparation » qui est le produit qui est mis en place à l'étape de remplissage, et le « produit fritté » qui est le produit résultant du frittage du produit de réparation après l'étape de remplissage.

On appelle classiquement « cuve » d'un four de fusion de verre l'ensemble composé de la sole et des murs latéraux, gorge comprise, destiné à être en contact avec le verre en fusion lors de la fusion des matières premières. La sole de la cuve définit le fond sensiblement horizontal de la cuve et les murs verticaux, sensiblement verticaux, ceinturent le fond.

Les murs latéraux de la cuve et/ou des cloisons de compartimentation installées sur la sole peuvent délimiter l'étendue du fond de la région à remplir.

On considère que la longueur et la largeur de la région à remplir sont le grand axe et le petit axe de la plus grande ellipse pouvant être incluse dans l'ouverture intérieure (c'est-à-dire l'ouverture qui débouche vers l'intérieur de la cuve), de la région à remplir. La profondeur est la plus grande dimension mesurée perpendiculairement à ladite ouverture intérieure.

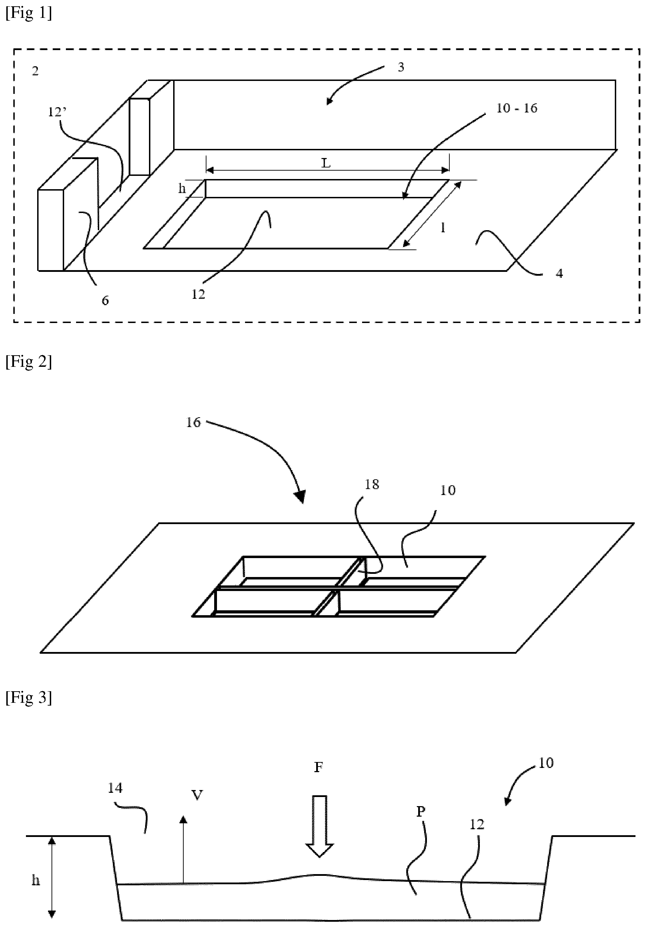

On appelle « surface de la région à remplir » la surface du fond de la région à remplir. Par exemple, comme illustré sur la figure 1, si la région à remplir 10 est une dépression présentant la forme générale d'un parallélépipède rectangle, et ayant une longueur L, une largeur 1 et une profondeur h, la surface de la région à remplir est égale au produit L*1.

Comme illustré sur la figure 3, la vitesse de montée V est la vitesse, mesurée suivant la direction verticale, à laquelle le produit de réparation P remplit la région à remplir 10.

Lorsque la région à remplir présente un fond 12 ou 12' horizontal, la vitesse de montée est donc mesurée perpendiculairement au fond. Sur la figure 3, la flèche F illustre l'arrivée du produit de réparation P dans la région à remplir.

Le « nappage » est une étape préalable à l'étape de remplissage.

Le nappage commence au début de l'introduction du produit de réparation dans la région à remplir et se termine à l'instant où le fond de la région à remplir est pour la première fois totalement recouvert par du produit de réparation. En particulier, lorsque le produit de réparation est auto-coulable, il est classiquement introduit dans la région à remplir au moyen d'une canne, puis s'écoule sur la sole jusqu'à atteindre les murs latéraux et/ou les cloisons de compartimentation. Il recouvre ainsi progressivement tout le fond de la région à remplir. L'étape de nappage est terminée lorsque le produit de réparation, contenu par les murs latéraux et/ou les cloisons de compartimentation, recouvre tout le fond de la région à remplir et qu'il est donc contraint de monter dans la région à remplir, pendant l'étape de remplissage.

Si le fond comporte une ou plusieurs cavités, le remplissage de ces cavités fait partie de l'étape de nappage. Le nappage ne se termine que lorsque toute la surface du produit de réparation introduit dans la région à remplir commence à monter.

On appelle « produit non-façonné » un mélange particulaire sec.

Par particule « en un matériau » ou « d'un matériau », on entend une particule constituée pour plus de 95%, plus de 98%, de préférence sensiblement 100% de sa masse dudit matériau.

Un ciment hydraulique, ou « liant hydraulique », est un liant qui, lors de l'activation, génère une prise et un durcissement hydraulique.

Par « matériau réfractaire », on entend un matériau présentant une température de fusion supérieure à 1500°C. Cette définition est communément employée par l'homme du métier et citée dans « Matériaux réfractaires et céramiques techniques (éléments de céramurgie et de technologie) », G. Aliprandi, éditions Septima Paris, 1979. Cet ouvrage donne également en pages 297 à 301 des exemples de matériaux réfractaires, notamment oxydes, carbures et nitrures.

Le « verre » des particules (b) mentionnées dans la suite de la description est un matériau non cristallin présentant une température de transition vitreuse inférieure à 1100°C. Par « température de transition vitreuse » d'un verre, on entend la température à laquelle le matériau passe de l'état solide à l'état visqueux. La température de transition vitreuse peut être déterminée par analyse thermique différentielle (ATD). La température de transition vitreuse est la température à laquelle le verre présente une viscosité sensiblement égale à 10¹² Pa.s. Un verre est classiquement considéré « à l'état solide » à une température inférieure à sa température de transition vitreuse. De même, comme cela est bien connu, une vitrocéramique est considérée « à l'état solide » lorsqu'il est à une température inférieure à la température de transition vitreuse de sa phase vitreuse résiduelle.

Par « liant à chaud », on entend un constituant présentant une température de fusion supérieure à 600°C, et apte à lier ensemble, après durcissement sous l'effet d'une baisse de la température, des particules, en particulier des particules (a), décrites ci-après, auxquelles il a été mélangé.

Par « vitrocéramique » ou « matériau vitrocéramique », on entend classiquement un composé microcristallin obtenu par cristallisation contrôlée d'un « verre précurseur de vitrocéramique ». La cristallisation contrôlée d'un verre précurseur de vitrocéramique s'effectue classiquement lors d'une étape suivant, immédiatement ou non, l'étape d'obtention dudit verre précurseur de vitrocéramique.

Un verre précurseur de vitrocéramique est un verre à l'état solide qui, à la différence des autres verres, contient des « agents de nucléation ». Un agent de nucléation est un agent capable de provoquer la formation de microcristallisations ou « microcristallites » lors du traitement thermique de cristallisation contrôlée, appelé habituellement "traitement thermique de cristallisation" ou "traitement thermique de vitrocéramisation", un microcristallite étant un cristal dont à la demi somme de la longueur et de la largeur est inférieure à 10µm. Les longueur et largeur d'un microcristallite sont classiquement évaluées à partir de vues en coupe de la vitrocéramique.

La microstructure d'une vitrocéramique est ainsi constituée de microcristallites baignant dans une phase vitreuse résiduelle. La température de fusion d'un matériau vitrocéramique est la température d'équilibre séparant le domaine où coexistent des phases liquides et solides du domaine où seule une phase liquide est présente. Les produits fabriqués par fusion-refroidissement qui, au cours de leur fabrication, ne transitent pas par une étape dans laquelle ils sont à l'état de verre ne sont donc pas des matériaux vitrocéramiques. Le corindon fondu, l'alumine fondue, les spinelles fondus, la magnésie fondue, la mullite fondue, la mullite-zircone fondue, le titanate d'aluminium fondu, éventuellement dopé, et les nitrures fondus ne sont pas, en particulier, des matériaux vitrocéramiques.

On appelle « taille maximale » le percentile 99,5 (D_{99,5}) d'une poudre, ce percentile correspondant au pourcentage en masse de 99,5%, sur la courbe de distribution granulométrique cumulée des tailles des particules de la poudre, les tailles des particules étant classées par ordre croissant. Les distributions granulométriques et la taille maximale peuvent être déterminés à l'aide d'un granulomètre laser. Le granulomètre laser peut être un Partica LA-950 de la société HORIBA. Il est clair que les particules ayant une taille inférieure à 10 µm (qui constituent la « fraction < 10 µm ») sont comptabilisées dans la fraction des particules ayant une taille inférieure à 40 µm, que les particules ayant une taille inférieure à 2 µm sont comptabilisées dans la fraction des particules ayant une taille inférieure à 40 µm et dans la fraction des particules ayant une taille inférieure à 10 µm, etc.

Par « impuretés», on entend les constituants inévitables, introduits involontairement et nécessairement avec les matières premières ou résultant de réactions avec ces constituants. Les impuretés ne sont pas des constituants nécessaires, mais seulement tolérés. De préférence la quantité des impuretés est inférieure à 2%, inférieure à 1%, inférieure à 0,5%, voire sensiblement nulle.

Par « auto-coulable à chaud », on entend un produit de réparation capable de s'étaler sous son seul propre poids, et de remplir la région à remplir sans conduire à une ségrégation, dans une gamme de température comprise entre 300°C et 1350°C. On considère qu'il y a ségrégation lorsque la face de coulée du produit obtenu après mise en place du produit de réparation et frittage présente une couche superficielle de laitance s'étendant, depuis ladite face de coulée, sur une profondeur de 3 mm ou plus. Cette couche superficielle de laitance peut facilement être mise en évidence après séchage ou frittage du produit, le sciage s'effectuant dans un plan perpendiculaire à la face de coulée.

Les produits AZS sont des produits, de préférence électrofondus, dont les constituants principaux sont l'alumine (Al₂O₃), la zircone (ZrO₂) et la silice (SiO₂). Autrement dit, l'alumine, la zircone et la silice sont les constituants dont les teneurs massiques sont les plus élevées. Ces produits conviennent bien pour la fabrication des fours de verrerie. Plus particulièrement, les produits AZS actuels sont principalement utilisés pour les régions en contact avec le verre en fusion ainsi que pour la superstructure des fours de verrerie. Les produits AZS comprennent notamment des produits commercialisés par Saint-Gobain SEFPRO, tels que l'ER-1681, I'ER-1685 ou l'ER-1711.

Lorsqu'il est fait référence à ZrO₂ ou à la zircone il y a lieu de comprendre ZrO₂ et les traces de HfO₂. En effet, un peu de HfO₂, chimiquement indissociable du ZrO₂ dans un procédé de fusion et présentant des propriétés semblables, est toujours naturellement présent dans les sources de zircone à des teneurs généralement inférieures à 2%. L'oxyde d'hafnium n'est alors pas considéré comme une impureté. La teneur en HfO₂ dans les particules AZS est de préférence inférieure à 5%, inférieure à 3%, inférieure à 2%.

On appelle « fibres » des structures allongées, typiquement de diamètre de 1 µm à 1 mm et de longueur allant jusqu'à 60 mm environ.

Sauf mention contraire, tous les pourcentages sont des pourcentages massiques sur la base des oxydes. Une teneur massique d'un élément est exprimée sous la forme de l'oxyde le plus stable.

« Comporter » ou « comprendre » ou « présenter » doivent être interprétés de manière non limitative.

### Description détaillée

**A l'étape a),** on définit la région à remplir, qui peut être la région à réparer ou une partie de la région à réparer.

### Région à réparer/à remplir

Un procédé selon l'invention est destiné à la réparation d'une partie d'une cuve d'un four contenant du verre en fusion. Cette partie de la cuve, ou « région à réparer », définit donc un volume que le procédé a pour objectif de remplir, de manière contrôlée, avec un produit de réparation.

La figure 1 représente très schématiquement un four 2 comportant une cuve 3 définie par une sole 4 et des murs 6.

La région à réparer peut être incluse dans un mur ou dans la sole de la cuve. De préférence, elle est principalement délimitée par la sole.

La région à réparer 16 peut présenter la forme d'une cavité, traversante ou non, par exemple d'une région en dépression, notamment du fait d'une usure, débouchant vers l'intérieur de la cuve par une ouverture intérieure.

Lorsque la région à réparer traverse la cuve, l'ouverture par laquelle elle débouche à l'extérieur de la cuve est préférence obturée pour que la cavité puisse retenir le produit de réparation avant qu'il ne soit fritté. Cette opération est classiquement appelée « placage ».

Dans un mode de réalisation, notamment si la région à réparer appartient à un mur de la cuve, un coffrage peut être réalisé pour délimiter au moins une région à remplir et contenir le produit de réparation dans la région à remplir après sa mise en place. Toute technique de coffrage résistant à la température présente dans le four lors de la réparation peut être utilisée, notamment l'utilisation de plaques métalliques refroidies par circulation d'eau, ces plaques étant démontées après mise en place du produit de réparation.

Comme illustré sur la figure 1, la région à réparer 16 peut se confondre avec la région à remplir 10.

Dans un autre mode de réalisation et comme illustré sur la figure 2, en particulier lorsque les dimensions de la région à réparer, la nature du produit de réparation et le matériel pour acheminer le produit de réparation ne permettent pas d'atteindre la vitesse de montée et la durée de nappage souhaitées, la région à remplir 10 est délimitée au moyen d'une ou plusieurs cloisons de compartimentation 18, de préférence sensiblement verticales, rapportées dans le four. Ces cloisons de compartimentation permettent ainsi de réduire la surface de la région à remplir et ainsi, en utilisant le même matériel, d'augmenter la vitesse de montée et de réduire la durée de l'étape de nappage.

La compartimentation est particulièrement utile lorsque la région à remplir est au moins en partie définie par la sole.

De préférence, la région à remplir présente une surface supérieure ou égale à 3 m², de préférence supérieure ou égale à 4 m², de préférence supérieure ou égale à 5 m², de préférence supérieure ou égale à 6 m², de préférence supérieure ou égale à 9 m², et de préférence inférieure ou égale à 25 m², de préférence inférieure à 16 m². De telles surfaces sont bien adaptées pour permettre un remplissage selon l'invention en mettant en œuvre les techniques actuelles (pompes, cannes) utilisées pour acheminer les produits de réparation connus.

La profondeur h de la région à remplir n'est pas limitative. Elle est de préférence supérieure à 1 cm, de préférence supérieure à 2 cm, de préférence supérieure à 3 cm, de préférence supérieure à 5 cm et/ou de préférence inférieure à 20 cm, de préférence inférieure à 15 cm.

De manière générale, les dimensions et la forme de la région à remplir peuvent être quelconques, pourvues qu'elles autorisent un nappage et un remplissage dans des conditions conformes à l'invention.

La région à réparer peut être découpée en plusieurs compartiments, au moins une partie, de préférence plus de 50% en nombre des compartiments, de préférence chaque compartiment constituant de préférence une région à remplir telle que définie ci-dessus. L'homme du métier sait aisément déterminer le nombre et les dimensions des compartiments à cet effet.

De préférence, la sole du four de fusion de verre présente au moins deux régions à remplir, dont une présente une surface supérieure à 3 m², de préférence supérieure à 4 m².

Les compartiments peuvent être fabriqués selon toutes techniques connues de l'homme du métier. En particulier, pour la sole, les compartiments peuvent être fabriqués par agencement de briques en un matériau réfractaire, en particulier un matériau électrofondu, présentant de préférence une composition chimique proche de celle du produit de réparation. La pose des briques ou de cloisons de compartimentation, de préférence réalisées en dehors du four, peut être réalisée, classiquement manuellement, au moyen d'outils refroidis.

De préférence, les cloisons 18 qui délimitent les compartiments, par exemples constituées avec lesdites briques, ne sont pas retirées après la mise en place du produit de réparation.

**A l'étape b),** on procède au nappage du fond de la région à remplir avec le produit de réparation.

### Produit de réparation

Le produit de réparation P est de préférence humide, de préférence auto-coulable à chaud.

De préférence, le produit de réparation est le résultat de l'humidification d'un produit non façonné. Ladite humidification peut être effectuée selon toute technique connue, par exemple dans un malaxeur. L'homme du métier sait déterminer la quantité d'eau à utiliser pour humidifier le produit non façonné et obtenir le produit de réparation.

Dans un premier mode de réalisation préféré, notamment lorsque la région à remplir est localisée au niveau de la sole de la cuve du four, le produit non façonné comporte
A) des particules (a) d'au moins un matériau réfractaire différent d'un verre et d'une vitrocéramique, et dont le ou les constituants principaux sont l'alumine (Al₂O₃) et/ou la zircone (ZrO₂) et/ou la silice (SiO₂) et/ou l'oxyde de chrome (Cr₂O₃), les particules (a) constituant le complément à 100%,
B) 2% à 15% de particules (b) d'un liant à chaud choisies parmi des particules de vitrocéramique, des particules en un verre, en particulier en un verre précurseur de vitrocéramique, et les mélanges de ces particules, le liant à chaud n'étant pas à l'état solide à 1500°C, c'est-à-dire le liant à chaud étant choisi de manière que sa phase vitreuse présente une température de transition vitreuse inférieure ou égale à 1500°C,
C) moins de 2% de particules (c) de ciment hydraulique,
la quantité totale de particules (a), (b) et (c) étant supérieure à 93% et inférieure ou égale à 100%, en pourcentage en masse par rapport à la masse du produit non façonné l'ensemble desdites particules (a) et (b), de préférence l'ensemble des particules du produit non façonné étant distribué, en pourcentages en masse par rapport à la masse du produit non façonné, de la manière suivante :

| | |
|---|---|
| - fraction < 0,5 µm : | ≥ 1%, |
| - fraction < 2 µm : | ≥ 4%, |
| - fraction < 10 µm : | ≥ 13%, |
| - fraction < 40 µm : | 25% - 52%. |

Dans un premier mode de réalisation principal, l'ensemble des particules (b) du produit non façonné comporte, voire est constitué de particules de verre.

Dans un deuxième mode de réalisation principal, l'ensemble des particules (b) du produit non façonné comporte, voire est constitué de particules de vitrocéramique et/ou de particules de verre précurseur de vitrocéramique.

De préférence, la quantité massique de particules de vitrocéramique et/ou de particules de verre précurseur de vitrocéramique dans l'ensemble des particules (b) du produit non façonné est supérieure à 10%, de préférence supérieure à 20%, de préférence supérieure à 30%, de préférence supérieure à 50%, de préférence supérieure à 70%, voire supérieure à 90%, voire supérieure à 95%, voire sensiblement égale à 100%, sur la base de la masse de l'ensemble des particules (b).

De préférence, l'ensemble des particules (b) du produit non façonné est constitué de particules de verre et comporte des particules de verre précurseur de vitrocéramique. De préférence encore, l'ensemble des particules (b) du produit non façonné est constitué de particules de verre précurseur de vitrocéramique.

De préférence, le produit non façonné peut comporter une ou plusieurs des caractéristiques suivantes :
- les particules (a) et (b), de préférence l'ensemble des particules du produit non façonné, se répartissent de la manière suivante, en pourcentages massiques :
   - fraction < 0,5 µm : ≤ 7%, de préférence ≤ 6%, de préférence ≤ 5%, et/ou voire ≥ 2%, et/ou
   - fraction < 2 µm : ≥ 5%, de préférence ≥ 6%, de préférence ≥ 7% et/ou de préférence ≤ 18%, de préférence ≤ 16%, de préférence ≤ 14%, de préférence ≤ 12%, et/ou
   - fraction < 10 µm : ≥ 16%, de préférence ≥ 19%, de préférence ≥ 20% et/ou, de préférence ≤ 40%, de préférence ≤ 35%, de préférence ≤ 33%, de préférence ≤ 30%, de préférence ≤ 28%, et/ou
   - fraction < 40 µm : ≥ 27%, de préférence ≥ 29%, de préférence ≥ 30%, de préférence ≥ 33%, de préférence ≥ 35%, de préférence ≥ 37% et/ou de préférence ≤ 50%, de préférence ≤ 47%, de préférence ≤ 45%, de préférence ≤ 42%, et/ou
   - fraction comprise entre 2 µm et 40 µm : ≥ 16% et/ou ≤ 40% ;
- la taille maximale de l'ensemble des particules (a) et (b), de préférence la taille maximale de l'ensemble des particules du produit non façonné, est inférieure ou égale à 5 mm, de préférence inférieure ou égale à 2,5 mm, de préférence inférieure ou égale à 2 mm, voire inférieure ou égale à 1,5 mm ;
- l'ensemble des particules (a) et (b) de taille inférieure à 500 µm, de préférence l'ensemble des particules du produit non façonné de taille inférieure à 500 µm, représente plus de 50%, de préférence plus de 55%, de préférence plus de 60%, de préférence plus de 65%, voire plus de 70% de la masse dudit produit non façonné ;
- la quantité de particules (a) dans le produit non façonné est supérieure à 82%, de préférence supérieure à 85%, de préférence supérieure à 91% et/ou inférieure à 98%, de préférence inférieure à 97% ;
- de préférence, l'ensemble des particules (a) comporte, en pourcentages massiques sur la base de la masse du produit non façonné :
   - une teneur en particules AZS supérieure à 10%, supérieure à 20% et/ou inférieure à 95% ; et/ou
   - une teneur en alumine réactive supérieure à 2%, supérieure à 3%, supérieure à 4%, et/ou inférieure à 13%, inférieure à 10%, inférieure à 8% ; et/ou
   - une teneur en alumine calcinée supérieure à 5%, supérieure à 10%, et/ou inférieure à 38%, inférieure à 35% ; et/ou
   - une teneur en alumine électrofondue supérieure à 10%, supérieure à 20%, supérieure à 25%, et/ou inférieure à 70%, inférieure à 65% ; et/ou
   - des particules présentant l'analyse chimique suivante, en pourcentage en masse sur la base des oxydes : Cr₂O₃ + Al₂O₃ + ZrO₂ + MgO + Fe₂O₃ + SiO₂ + TiO₂ ≥ 90%, de préférence ≥ 95%, et Cr₂O₃ + Al₂O₃ ≥ 40%, voire ≥ 50%, voire ≥ 60%, voire ≥ 70%, voire ≥ 80%, voire ≥ 90%, voire même ≥ 95%, et Cr₂O₃ ≥ 9%, voire ≥ 15%, voire ≥ 20%, voire ≥ 29%, voire ≥ 39%, voire ≥ 49%, voire ≥ 59%, voire ≥ 70%, voire ≥ 80%, voire ≥ 90%, et 20% ≥ SiO₂ ≥ 0,5%, et autres oxydes : ≤ 10%, de préférence ≤ 5%, la teneur en lesdites particules étant supérieure à 10%, supérieure à 20%, supérieure à 30% et/ou inférieure à 95%, et/ou
   - une teneur en oxyde de chrome pigmentaire supérieure à 5%, supérieure à 10%, et/ou inférieure à 25%, inférieure à 20% ;
- le liant à chaud est choisi de manière à ne pas être à l'état solide à une température de 1350°C, de préférence de 1300°C, de préférence de 1250°C, de préférence de 1200°C, de préférence de 1150°C ;
- les particules (b) représentent plus de 3% et moins de 13%, de préférence moins de 12%, de préférence moins de 10%, de préférence moins de 9%, de préférence moins de 8% de la masse dudit produit non façonné ;
- les particules (b) du produit se répartissent de préférence de la manière suivante, en pourcentages massiques sur la base de la masse des particules (b) :
   - fraction ≤ 1 mm : ≥ 80%, de préférence ≥ 90%, voire ≥ 95%, voire sensiblement 100%, et/ou
   - fraction ≤ 0,5 mm : ≥ 80%, de préférence ≥ 90%, et/ou
   - fraction ≤ 0,1 mm : ≥ 25% et/ou ≤ 48%, de préférence ≤ 45%, et/ou
   - fraction ≤ 0,04 mm : ≤ 30%, de préférence ≤ 25%, voire ≤ 20% ;
- les particules (b) présentent de préférence une température de fusion supérieure à 750°C, de préférence supérieure à 800°C, de préférence supérieure à 900°C, et/ou inférieure à 1650°C, de préférence inférieure à 1600°C, de préférence inférieure à 1550°C, voire inférieure à 1500°C ;
- la composition chimique des particules (b) est choisie de manière à ce que leur température de fusion soit inférieure à la température de la région à remplir ;
- dans un mode de réalisation, les particules (b) présentent sensiblement la même composition que le verre en fusion dans le four à réparer ;
- de préférence, les particules (b) sont constituées en un matériau dont la composition chimique comporte plus de 90%, de préférence plus de 94%, de préférence plus de 97% d'oxydes ;
- dans un mode de réalisation, ledit matériau est sensiblement entièrement constitué d'oxydes ;
- les particules (b) sont constituées en un matériau dont la composition chimique comporte plus de 45%, de préférence plus de 50%, de préférence plus de 55% et/ou moins de 80%, de préférence moins de 75% de silice, en pourcentage massique ;
- les particules (b) en un verre précurseur de vitrocéramique et/ou les particules (b) en vitrocéramique présentent la composition chimique suivante, en pourcentages massiques sur la base des oxydes et pour un total de plus de 95%, plus de 98%, de préférence de sensiblement 100% :
   - SiO₂ : 45% - 75%, et
   - Al₂O₃ : 5% - 40%, et
   - CaO + MgO + Li₂0 : 3% - 30%,
   - agents de nucléation, exprimés sous une forme oxyde : 0,1% - 20% ;
- la quantité des agents de nucléation est de préférence supérieure à 1% et/ou inférieure à 10%, de préférence inférieure à 5% ;
- de préférence, lesdits agents de nucléation sont choisis parmi TiO₂, ZrO₂, P₂O₅ et leurs mélanges ;
- la quantité de particules (c) de ciment hydraulique est de préférence inférieure à 1%, de préférence inférieure à 0,5% ;
- de préférence, la quantité de particules (c) de ciment hydraulique est sensiblement nulle ;
- la quantité totale de particules (a), (b) et (c) est de préférence supérieure à 95%, de préférence supérieure à 97%, de préférence supérieure à 98%, de préférence supérieure à 99%, le complément étant de préférence constitué d'autres oxydes et/ou d'agents tensio-actifs et/ou d'adjuvants anti-ségrégation et/ou de fibres ;
- le produit non façonné comporte un agent tensio-actif, de préférence entre 0,075% à 1% d'un agent tensio-actif ;
- l'agent tensio-actif est un éther polycarboxylate modifié ;
- le produit non façonné comporte de préférence un adjuvant anti-ségrégation, de préférence en une quantité comprise entre 0,05% et 0,5% de la masse du produit non façonné ;
- dans un mode de réalisation, le produit non façonné comporte des fibres, de préférence organiques, de préférence entre 0,01% et 0,06%, de préférence entre 0,01% et 0,03% ;
- dans un mode de réalisation, le produit non façonné ne comporte pas de fibres ;
- le produit non façonné est humidifié de manière à obtenir un produit de réparation, en y ajoutant une quantité d'eau de préférence supérieure à 8%, de préférence supérieure à 9% et/ou inférieure à 13%, inférieure à 12%, en masse par rapport à la masse dudit produit non façonné.

De préférence, au moins dans ce premier mode de réalisation, on utilise le produit Repair Hot Bottom AZS, commercialisé par la société Saint-Gobain Sefpro.

Dans un deuxième mode de réalisation préféré, notamment lorsque la région à remplir est localisée au niveau d'un mur de la cuve du four, le produit non façonné est choisi parmi le Hot Overcoat AZS et le Hot Overcoat Chrom50, commercialisés par la société Saint-Gobain Sefpro.

Le produit de réparation peut être amené jusqu'à la région à remplir selon toute technique connue de l'homme du métier. De préférence, le produit de réparation est pompé au moyen d'une pompe produisant une pression d'aspiration de préférence inférieure ou égale à 180 bar et de préférence acheminé jusqu'à la région à remplir au moyen d'une canne refroidie par eau. Des passages, par exemple réalisés par perçage, peuvent être aménagés pour permettre de pouvoir positionner la canne refroidie à cet effet.

Dans un mode de réalisation, le produit de réparation est prêt à l'emploi, c'est-à-dire déjà humidifié. Avantageusement, la vitesse de montée du produit de réparation peut être augmentée et/ou le nombre ou la capacité des pompes diminués.

Le produit de réparation est de préférence coulé dans la région à remplir.

### Durée de nappage

Les inventeurs ont découvert que la vitesse de montée supérieure ou égale à 3 mm/min doit être atteinte rapidement après que le produit de réparation a commencé à être introduit dans la région à remplir.

Lorsque la région à remplir est dans un mur de la cuve, les dimensions du fond sont réduites de sorte que le produit commence à monter peu de temps après le début de son introduction dans la région à remplir. Le nappage du fond de la région à remplir dure donc classiquement moins de 14 minutes. La condition d'une durée de nappage qui dure moins de 14 minutes n'est donc pas limitative en pratique pour une région à remplir dans un mur de cuve.

En revanche, lorsque le fond de la région à remplir est défini par la sole, sa surface horizontale peut être étendue, de sorte que l'étape de nappage pendant laquelle le produit de réparation recouvre progressivement le fond peut être de longue durée.

Or pendant l'étape de nappage, il existe des portions du fond qui ne sont pas recouvertes par du produit de réparation, et des portions du fond qui sont recouvertes par du produit de réparation. Mais dans ces dernières, la vitesse de montée du produit de réparation est très faible, voire nulle, et, à débit d'alimentation constant en produit de réparation, plus faible que la vitesse de montée pendant l'étape de remplissage. Le produit de réparation, non contraint latéralement, a en effet tendance à s'écouler par gravité, plutôt que de monter dans la région à remplir, notamment si le produit de réparation est auto-coulable. Si l'étape de nappage dure plus de 14 minutes, les inventeurs ont découvert qu'elle peut conduire à une hétérogénéité du produit fritté, ce qui peut limiter sa durée de vie.

De préférence, la durée de nappage, c'est-à-dire la durée de l'étape de nappage, est inférieure à 12 minutes, de préférence inférieure à 11 minutes, de préférence inférieure à 10 minutes, de préférence inférieure à 9 minutes, de préférence inférieure à 8 minutes, voire inférieure à 7 minutes, voire inférieure à 6 minutes, et/ou supérieure à 15 secondes, de préférence supérieure à 20 secondes.

De préférence, lorsque la région à remplir appartient à la sole de la cuve, la durée de nappage, exprimée en minutes, est inférieure à 0,6 min/m² *S, de préférence inférieure à 0,5 min/m² *S, de préférence inférieure à 0,4 min/m² *S, de préférence inférieure à 0,3 min/m² *S, S étant la surface du fond de la région à remplir, exprimée en m².

Pour réduire la durée de nappage, il suffit de réduire la surface de la région à remplir ou d'augmenter le débit d'introduction du produit de réparation dans la région à remplir.

De préférence à l'étape b), l'arrivée du produit de réparation est localisée à moins d'un mètre du centre du fond de la région à remplir, de préférence sensiblement au centre du fond de la région à remplir.

**A l'étape c),** on procède au remplissage de la région à remplir.

De préférence, l'étape c) suit immédiatement l'étape b), c'est-à-dire qu'il n'y a pas d'interruption de l'alimentation en produit de réparation entre ces étapes. De préférence, le débit d'alimentation est identique et constant pendant ces deux étapes.

De préférence à l'étape c), l'arrivée du produit de réparation est localisée à moins d'un mètre du centre du fond de la région à remplir, de préférence sensiblement au centre du fond de la région à remplir.

Pendant l'étape c), toute la surface du produit de réparation présent dans la région à remplir monte.

### Vitesse de montée

Les inventeurs ont constaté qu'après un nappage rapide, une vitesse de montée supérieure ou égale à 3 mm/min pendant toute l'étape de remplissage améliore très sensiblement les propriétés de la région réparée. Sans être liés par cette théorie, les inventeurs expliquent ce résultat par une homogénéité remarquable du produit fritté, c'est-à-dire du produit résultant du frittage du produit de réparation.

Dans un mode de réalisation, en particulier si la région à remplir appartient à la sole de la cuve, la différence entre la vitesse de montée maximale et la vitesse de montée minimale pendant l'étape de remplissage est inférieure à 15 mm/min, de préférence inférieure à 10 mm/min, de préférence inférieure à 8 mm/min, de préférence inférieure à 5 mm/min, de préférence inférieure à 3 mm/min, de préférence sensiblement nulle. Une faible différence, de préférence une vitesse de montée sensiblement constante, améliore encore l'homogénéité du produit fritté.

De préférence, ladite vitesse de montée est, pendant toute l'étape c) de remplissage, supérieure à 4 mm/min, de préférence supérieure à 5 mm/min, de préférence supérieure à 6 mm/min, de préférence supérieure à 7 mm/min, de préférence supérieure à 8 mm/min, de préférence supérieure à 9 mm/min, de préférence supérieure à 10 mm/min, et de préférence inférieure à 80 mm/min, de préférence inférieure à 70 mm/min, de préférence inférieure à 60 mm/min, de préférence inférieure à 50 mm/min, de préférence inférieure à 40 mm/min, de préférence inférieure à 30 mm/min.

Dans un mode de réalisation, notamment si la région à remplir appartient à la sole de la cuve, la vitesse de montée est de préférence toujours inférieure à 80 mm/min, de préférence inférieure à 70 mm/min, de préférence inférieure à 60 mm/min, de préférence inférieure à 50 mm/min, de préférence inférieure à 45 mm/min, de préférence inférieure à 40 mm/min, de préférence inférieure à 35 mm/min, de préférence inférieure à 30 mm/min. Avantageusement, ces conditions offrent le meilleur compromis entre les propriétés du produit de réparation après frittage et le respect des contraintes liées au chantier de réparation, notamment les contraintes d'encombrement qui limitent le volume des pompes utilisées pour amener le produit de réparation jusqu'à la région à remplir, et/ou le nombre de ces pompes, ainsi que la surface des régions à remplir.

De préférence, à l'étape b) et/ou à l'étape c), de préférence à l'étape b) et à l'étape c), le produit de réparation est introduit dans la région à remplir avec un débit supérieur à 0,02 m³/min, de préférence supérieur à 0,03 m³/min, de préférence supérieur à 0,05 m³/min, de préférence supérieur à 0,10 m³/min et/ou inférieur à 0,60 m³/min, de préférence inférieur à 0,50 m³/min, de préférence inférieur à 0,40 m³/min, de préférence inférieur à 0,30 m³/min.

### Réparation à chaud

Un procédé selon l'invention est utilisé pour la réparation à chaud d'une cuve contenant initialement un bain de verre en fusion en contact avec la région à réparer. Dans un mode de réalisation, le procédé comporte, préalablement aux étapes a) à c), les étapes préalables suivantes :
1) vidange, au moins partielle, dudit verre en fusion hors de la cuve, de manière à exposer ladite région à réparer ;
2) de préférence, rinçage de ladite région à réparer ;
3) réduction de la température dans le four.

Le procédé comporte ensuite les étapes finales suivantes :
4) mise en œuvre des étapes a) à c) ;
5) de préférence, augmentation et maintien de la température du four entre 900°C et 1400°C afin de fritter le produit de réparation ;
6) introduction d'une composition de verre à fondre dans la cuve et augmentation de la température du four jusqu'à une température de fonctionnement conduisant à la fusion de ladite composition.

Les étapes préalables permettent de donner accès à la région à réparer, c'est-à-dire d'exposer cette région.

**A l'étape 1),** on procède donc à la vidange du verre, c'est-à-dire que l'on vide la cuve du four, au moins partiellement, de préférence sensiblement totalement, du verre en fusion qu'il contient, jusqu'à découvrir la région à réparer. La vidange peut être réalisée selon toute technique connue de l'homme du métier.

Par exemple, il est possible de refroidir le verre en fusion à l'aide de lances à eau et d'évacuer du four le verre refroidi et/ou d'évacuer du four le verre en fusion, au travers de trous percés dans la sole ou au travers de trous créés par le démontage d'une ou de plusieurs électrodes.

**A l'étape 2),** optionnelle mais préférée, la région à réparer est rincée, c'est-à-dire débarrassée des résidus de verre. De préférence, on pulvérise, au moins sur la région à réparer, un produit adapté pour augmenter la fluidité du verre. Le verre ainsi fluidifié s'évacue plus facilement hors du four, notamment dans le cas d'une évacuation de verre en fusion. De préférence, le produit de fluidification est choisi parmi le sulfate de sodium, le carbonate de sodium, la soude et leurs mélanges.

**A l'étape 3),** la température dans le four est réduite.

De préférence, la température dans le four est réduite à une température supérieure à 300°C, de préférence supérieure à 400°C, de préférence supérieure à 500°C, de préférence supérieure à 600°C, de préférence supérieure à 700°C, de préférence supérieure à 800°C, de préférence supérieure à 900°C, et de préférence inférieure à 1350°C, de préférence inférieure à 1300°C.

Dans un mode de réalisation, le produit de réparation utilisé aux étapes b) et c) contient un liant à chaud, et à l'étape 3), la température dans le four est réduite à une température à laquelle le liant à chaud n'est pas à l'état solide. En particulier, lorsque le liant à chaud est une vitrocéramique et/ou un verre, en particulier un verre précurseur de vitrocéramique, la température dans le four est réduite à une température qui reste supérieure à la température de transition vitreuse de la phase vitreuse du liant à chaud. La température de transition vitreuse de la phase vitreuse du liant à chaud dépend de la nature du liant à chaud. Le liant à chaud est de préférence choisi pour que la température de transition vitreuse de sa phase vitreuse soit comprise entre 600°C et 1350°C, de préférence entre 900°C et 1350°C, de préférence entre 1000°C et 1300°C, de préférence entre 1150°C et 1250°C.

**A l'étape 4**), le produit de réparation est mis en place suivant les étapes a) à c).

**A l'étape 5**), optionnelle, le four est maintenu à une température comprise entre 900°C et 1400°C, de préférence entre 1250°C et 1400°C, de préférence entre 1300°C et 1400°C, afin de permettre le frittage du produit de réparation, de préférence pendant un temps supérieur à 8 heures, de préférence supérieur à 10 heures et de préférence inférieur à 15 heures.

De préférence, lorsque le produit de réparation contient des particules (b) de verre précurseur de vitrocéramique, le four est maintenu à une température favorisant la nucléation et la croissance des microcristallites. L'homme du métier sait déterminer le domaine de températures permettant cette nucléation et cette croissance.

**A l'étape 6**), l'exploitation normale du four est reprise : Une composition de verre à fondre est introduite dans le four et la température de celui-ci est augmentée jusqu'à sa température de fonctionnement.

### Exemples

Les exemples non limitatifs qui vont suivre sont donnés en vue d'illustrer l'invention.

Trois exemples ont été réalisés avec le même produit de réparation, la vitesse de montée du produit de réparation étant différente.

Pour fabriquer le produit de réparation, le produit non façonné Repair Hot Bottom AZS, commercialisé par la société Saint-Gobain Sefpro a été mélangé, dans un malaxeur à pale rotative et cuve fixe, avec 11% d'eau, en pourcentage sur la base du produit non façonné, pendant 5 minutes.

Ce produit non façonné présente la composition massique suivante, sur la base de la masse des oxydes du produit non façonné :
- Al₂O₃ : 51,8%
- SiO₂ : 16,8%
- ZrO₂ : 28,7%
- Autres oxydes : 2,7%, constitué de CaO, de Na₂O, de K₂O et de MgO apportés par le verre, ainsi que d'impuretés.

Pour chaque exemple, 50 kg de produit de réparation sont préparés. Ce produit de réparation est auto-coulable à chaud.

Pour chaque exemple, un compartiment à fond plat présentant une longueur égale à 300 mm et une largeur égale à 250 mm, soit une surface totale égale à 0,075 m², et une profondeur égale à 150 mm a été réalisé dans un four électrique, au moyen de briques réfractaires en ER1681.

Le four a été mis en route de manière à atteindre une température de 1300°C, la vitesse de montée en température étant de 100°C/h.

Le coulage du produit de réparation dans le compartiment maintenu à 1300°C, a été effectué à l'aide d'une canne métallique refroidie par eau introduite par une ouverture réalisée dans une des parois latérales du four électrique.

Pour l'exemple 1, hors invention, le produit de réparation a été introduit sous la forme de fines couches successives superposées, jusqu'à ce que le compartiment soit rempli. Chaque couche a été réalisée en faisant des aller-retours avec la canne pour étaler le produit de réparation sous la forme de cordons adjacents.

Pour les exemples 2 et 3, selon l'invention, la canne a été maintenue immobile et le produit de réparation a été coulé de manière continue, le niveau du produit de réparation augmentant en permanence au-dessus de tout point du fond du compartiment après l'étape de nappage. La vitesse de montée était sensiblement constante.

Après avoir rempli le compartiment, la température a été maintenue à 1300°C pendant 10 heures. La température a ensuite été réduite de manière progressive, à une vitesse égale à 100°C/h. Le produit fritté se trouvant dans le compartiment a été récupéré, observé puis découpé.

Les inventeurs considèrent que ce test reproduit bien les conditions rencontrées lors d'une réparation d'une sole de four.

La porosité ouverte a été mesurée par pesée hydrostatique.

La résistance à la compression à froid a été mesurée au moyen d'une presse LR150K commercialisée par AMETEK-LLOYD, sur des cylindres de diamètre égal à 30 mm et de hauteur égale à 30 mm prélevés dans le produit fritté.

Le tableau 1 suivant fournit les vitesses de remplissage ainsi que les résultats obtenus.

**[Tableau 1]**

| | Exemple 1 | Exemple 2 | Exemple 3 |
|---|---|---|---|
| Durée de l'étape de nappage (min) | 5 | 0,25 | 0,8 |
| Vitesse de montée (mm/min) | 2 | 40 | 12 |
| Porosité ouverte (%) | 42 | 29 | 25 |
| Résistance à la compression à froid (MPa) | 28 | 56 | 65 |

L'observation du produit fritté réalisé selon l'exemple 1 montre qu'il présente des strates empilées les unes sur les autres et de nombreux macropores.

L'observation du produit fritté réalisé selon l'exemple 2 montre qu'il présente au contraire de l'exemple 1 une texture homogène, une porosité ouverte égale à 29%, 31% inférieure à celle du produit fritté réalisé selon l'exemple 1 (égale à 42%), et une résistance à la compression égale à 56 MPa, 2 fois supérieure à celle du produit fritté réalisé selon l'exemple 1 (égale à 28 MPa).

L'observation du produit fritté réalisé selon l'exemple 3 montre qu'il présente au contraire de l'exemple 1 une texture homogène, une porosité ouverte égale à 25%, 40% inférieure à celle du produit fritté réalisé selon l'exemple 1 (égale à 42%), et une résistance à la compression égale à 65 MPa, 2,3 fois supérieure à celle du produit fritté réalisé selon l'exemple 1 (égale à 28 MPa).

Ces caractéristiques remarquables permettent d'augmenter la durée de vie de la région réparée, et donc la durée de vie de la cuve du four.

Ces exemples démontrent ainsi l'effet très avantageux d'un contrôle de la durée de nappage et de la vitesse de montée pour s'assurer d'une progression continue du produit de réparation dans la région à remplir.

Comme cela apparaît clairement à présent, l'invention fournit ainsi un procédé de réparation d'une cuve d'un four de fusion de verre, et en particulier d'une région de la sole de cette cuve, ce procédé permettant d'augmenter la durée de vie de la cuve du four.

Un procédé selon l'invention est particulièrement avantageux pour réparer une région à réparer de grandes dimensions, et en particulier la sole du four.

Bien entendu la présente invention n'est pas limitée aux modes de réalisation décrits, fournis à titre d'exemples illustratifs et non limitatifs.

## Revendications

1. Procédé de réparation à chaud d'une région d'une cuve d'un four de verrerie, dite « région à réparer », au moyen d'un produit de réparation (P), ledit procédé comportant les étapes suivantes, à une température supérieure à 300°C :
a) définition d'un espace de réception dans la région à réparer, dit « région à remplir », la région à remplir (10) comportant un fond (12 ; 12') ;
b) nappage dudit fond, la durée du nappage, depuis le début de l'introduction du produit de réparation dans la région à remplir jusqu'à l'instant où ledit fond est complètement recouvert par du produit de réparation, étant inférieure à 14 minutes ;
c) remplissage de la région à remplir avec le produit de réparation, la vitesse de montée (V) du produit de réparation dans la région à remplir étant, à tout instant pendant ladite étape de remplissage, supérieure ou égale à 3 mm/min.

2. Procédé selon la revendication précédente, dans lequel la vitesse de montée (V) varie, pendant ladite étape de remplissage, entre une vitesse minimale et une vitesse maximale, la différence entre ladite vitesse maximale et ladite vitesse de montée minimale étant inférieure à 15 mm/min.

3. Procédé selon l'une quelconque des revendications précédentes, dans lequel la vitesse de montée (V) du produit de réparation (P) est, à tout instant pendant ladite étape c) de remplissage, supérieure à 7 mm/min et/ou dans lequel la durée de l'étape b) de nappage est inférieure à 10 minutes.

4. Procédé selon la revendication immédiatement précédente, dans lequel la vitesse de montée (V) du produit de réparation (P) est, à tout instant pendant ladite étape de remplissage, supérieure à 12 mm/min et/ou dans lequel la durée de l'étape b) de nappage est inférieure à 8 minutes.

5. Procédé selon l'une quelconque des revendications précédentes, dans lequel la région à remplir (10) présente une surface inférieure ou égale à 25 m².

6. Procédé selon l'une quelconque des revendications précédentes, dans lequel la région à remplir présente une surface supérieure ou égale à 3 m² et inférieure à 16 m².

7. Procédé selon l'une quelconque des revendications précédentes, dans lequel à l'étape b) et à l'étape c), le produit de réparation (P) est introduit dans la région à remplir avec un débit supérieur à 0,02 m³/min et inférieur à 0,60 m³/min.

8. Procédé selon l'une quelconque des revendications précédentes, dans lequel la vitesse de montée du produit de réparation est, à tout instant pendant ladite étape de remplissage, inférieure à 80 mm/min.

9. Procédé selon l'une quelconque des revendications précédentes, dans lequel, pendant l'étape de remplissage, le produit de réparation est acheminé jusqu'à la région à remplir par pompage.

10. Procédé selon la revendication immédiatement précédente, dans lequel le produit de réparation est acheminé jusqu'à la région à remplir avec une pression d'aspiration inférieure ou égale à 180 bar.

11. Procédé selon l'une quelconque des revendications précédentes, dans lequel la région à remplir (10) est définie
- par la surface de la cuve dans la région à réparer et/ou
- par une ou plusieurs cloisons de compartimentation (18) rapportées dans la région à réparer.

12. Procédé selon l'une quelconque des revendications précédentes, comportant une étape a) dans laquelle la région à réparer est divisée en une pluralité de compartiments, puis une pluralité de cycles d'étapes b) et c) afin de remplir chacun desdits compartiments.

13. Procédé selon l'une quelconque des revendications précédentes, dans lequel la région à remplir est au moins en partie définie par la sole de la cuve.

14. Procédé selon l'une quelconque des revendications précédentes, ladite cuve contenant un verre en fusion, ledit procédé comportant les étapes suivantes :
1) vidange, au moins partielle, du verre en fusion hors de la cuve, de manière à exposer ladite région à réparer ;
2) de préférence, rinçage de ladite région à réparer ;
3) réduction de la température dans le four ;
4) mise en œuvre desdites étapes a) à c) ;
5) de préférence, augmentation et maintien de la température du four entre 900°C et 1400°C afin de fritter le produit de réparation ;
6) introduction d'une composition de verre à fondre dans la cuve et augmentation de la température du four jusqu'à une température de fonctionnement conduisant à la fusion de ladite composition.

15. Procédé selon l'une quelconque des revendications précédentes, dans lequel le produit de réparation est le résultat de l'humidification d'un produit non façonné en y ajoutant une quantité d'eau supérieure à 8%, en masse par rapport à la masse dudit produit non façonné.

16. Four de fusion de verre comportant une cuve comportant au moins une région réparée avec un produit, de préférence fritté, présentant une microstructure non-stratifiée et
- une porosité ouverte inférieure à 40%, de préférence inférieure à 35%, de préférence inférieure à 30%, et/ou
- une résistance à la compression à froid supérieure à 30 MPa.

## Patentansprüche

1. Verfahren zur Heißreparatur eines Bereichs einer Wanne eines Glasschmelzofens, "zu reparierender Bereich" genannt, mittels eines Reparaturprodukts (P), wobei das Verfahren die folgenden Schritte bei einer Temperatur über 300 °C umfasst:
a) Definieren eines Aufnahmeraums in dem zu reparierenden Bereich, "zu füllender Bereich" genannt, wobei der zu füllende Bereich (10) einen Boden (12; 12') umfasst;
b) Überziehen des Bodens, wobei die Dauer des Überziehens, vom Beginn des Einführens des Reparaturprodukts in den zu füllenden Bereich bis zu dem Zeitpunkt, zu dem der Boden vollständig mit dem Reparaturprodukt bedeckt ist, weniger als 14 Minuten beträgt;
c) Füllen des zu füllenden Bereichs mit dem Reparaturprodukt, wobei die Anstiegsgeschwindigkeit (V) des Reparaturprodukts in dem zu füllenden Bereich zu jedem Zeitpunkt während des Füllschritts 3 mm/min oder mehr beträgt.

2. Verfahren nach dem vorhergehenden Anspruch, wobei die Anstiegsgeschwindigkeit (V) während des Füllschritts zwischen einer minimalen Geschwindigkeit und einer maximalen Geschwindigkeit variiert, wobei die Differenz zwischen der maximalen Geschwindigkeit und der minimalen Anstiegsgeschwindigkeit weniger als 15 mm/min beträgt.

3. Verfahren nach einem der vorhergehenden Ansprüche, wobei die Anstiegsgeschwindigkeit (V) des Reparaturprodukts (P) zu jedem Zeitpunkt während des Füllschritts c) mehr als 7 mm/min beträgt und/oder wobei die Dauer des Überzugsschritts b) weniger als 10 Minuten beträgt.

4. Verfahren nach dem unmittelbar vorhergehenden Anspruch, wobei die Anstiegsgeschwindigkeit (V) des Reparaturprodukts (P) zu jedem Zeitpunkt während des Füllschritts mehr als 12 mm/min beträgt und/oder wobei die Dauer des Überzugsschritts b) weniger als 8 Minuten beträgt.

5. Verfahren nach einem der vorhergehenden Ansprüche, wobei der zu füllende Bereich (10) eine Fläche von 25 m² oder weniger aufweist.

6. Verfahren nach einem der vorhergehenden Ansprüche, wobei der zu füllende Bereich eine Fläche von 3 m² oder mehr und weniger als 16 m² aufweist.

7. Verfahren nach einem der vorhergehenden Ansprüche, wobei das Reparaturprodukt (P) im Schritt b) und im Schritt c) mit einem Volumenstrom von mehr als 0,02 m³/min und weniger als 0,60 m³/min in den zu füllenden Bereich eingeführt wird.

8. Verfahren nach einem der vorhergehenden Ansprüche, wobei die Anstiegsgeschwindigkeit des Reparaturprodukts zu jedem Zeitpunkt während des Füllschritts weniger als 80 mm/min beträgt.

9. Verfahren nach einem der vorhergehenden Ansprüche, wobei das Reparaturprodukt während des Füllschritts durch Pumpen bis zu dem zu füllenden Bereich befördert wird.

10. Verfahren nach dem unmittelbar vorhergehenden Anspruch, wobei das Reparaturprodukt mit einem Ansaugdruck von 180 bar oder weniger bis zu dem zu füllenden Bereich befördert wird.

11. Verfahren nach einem der vorhergehenden Ansprüche, wobei der zu füllende Bereich (10) definiert ist
- durch die Fläche der Wanne in dem zu reparierenden Bereich und/oder
- durch eine oder mehrere Schottwände (18), die in dem zu reparierenden Bereich eingesetzt sind.

12. Verfahren nach einem der vorhergehenden Ansprüche, umfassend einen Schritt a), in dem der zu reparierende Bereich in eine Mehrzahl von Kammern unterteilt wird, dann eine Mehrzahl von Zyklen aus Schritten b) und c), um jede der Kammern zu füllen.

13. Verfahren nach einem der vorhergehenden Ansprüche, wobei der zu füllende Bereich mindestens zum Teil durch den Wannenboden der Wanne definiert wird.

14. Verfahren nach einem der vorhergehenden Ansprüche, wobei die Wanne eine Glasschmelze enthält, wobei das Verfahren die folgenden Schritte umfasst:
1) Entleeren, mindestens partiell, der Glasschmelze aus der Wanne, so dass der zu reparierende Bereich freigelegt wird;
2) bevorzugt Spülen des zu reparierenden Bereichs;
3) Verringern der Temperatur in dem Ofen;
4) Durchführen der Schritte a) bis c);
5) bevorzugt Erhöhen und Halten der Temperatur des Ofens zwischen 900 °C und 1400 °C, um das Reparaturprodukt zu sintern;
6) Einführen einer zu schmelzenden Glaszusammensetzung in die Wanne und Erhöhen der Temperatur des Ofens bis auf eine Betriebstemperatur, die zum Schmelzen der Zusammensetzung führt.

15. Verfahren nach einem der vorhergehenden Ansprüche, wobei das Reparaturprodukt das Ergebnis der Befeuchtung eines ungeformten Produkts ist, indem zu ihm eine Wassermenge von mehr als 8 Masse-% bezogen auf die Masse des ungeformten Produkts hinzugefügt wird.

16. Ofen zum Schmelzen von Glas, der eine Wanne umfasst, die mindestens einen Bereich umfasst, der mit einem, bevorzugt gesinterten, Produkt repariert wurde, das ein nicht-geschichtetes Mikrogefüge aufweist und
- eine Offenporigkeit von weniger als 40 %, bevorzugt weniger als 35 %, bevorzugt weniger als 30 %, und/oder
- eine Kaltdruckfestigkeit von mehr als 30 MPa.

## Claims

1. Method for hot repair of a region of a tank of a glassmaking furnace, referred to as "target repair region", by means of a repair product (P), said method comprising the following steps, at a temperature greater than 300°C:
a) defining a receiving space in the target repair region, referred to as "target filling region", the target filling region (10) comprising a bottom (12; 12');
b) coating said bottom, the duration of coating, from the start of the introduction of the repair product into the target filling region to the moment when said bottom is completely covered by repair product, being less than 14 minutes;
c) filling the target filling region with the repair product, the rise velocity (V) of the repair product in the target filling region being, at any moment during said filling step, greater than or equal to 3 mm/min.

2. Method according to the preceding claim, wherein the rise velocity (V) varies, during said filling step, between a minimum velocity and a maximum velocity, the difference between said maximum rise velocity and said minimum rise velocity being less than 15 mm/min.

3. Method according to either of the preceding claims, wherein the rise velocity (V) of the repair product (P) is, at any moment during said filling step c), greater than 7 mm/min and/or wherein the duration of the coating step b) is less than 10 minutes.

4. Method according to the immediately preceding claim, wherein the rise velocity (V) of the repair product (P) is, at any moment during said filling step, greater than 12 mm/min and/or wherein the duration of the coating step b) is less than 8 minutes.

5. Method according to any one of the preceding claims, wherein the target filling region (10) has a surface area of less than or equal to 25 m².

6. Method according to any one of the preceding claims, wherein the target filling region has a surface area of greater than or equal to 3 m² and less than 16 m².

7. Method according to any one of the preceding claims, wherein, in step b) and in step c), the repair product (P) is introduced into the target filling region at a rate greater than 0.02 m³/min and less than 0.60 m³/min.

8. Method according to any one of the preceding claims, wherein the rise velocity of the repair product is, at any moment during said filling step, less than 80 mm/min.

9. Method according to any one of the preceding claims, wherein, during the filling step, the repair product is conveyed to the target filling region by pumping.

10. Method according to the immediately preceding claim, wherein the repair product is conveyed to the target filling region at a suction pressure of less than or equal to 180 bar.

11. Method according to any one of the preceding claims, wherein the target filling region (10) is defined
- by the surface of the tank in the target repair region and/or
- by one or more compartmentalization walls (18) emplaced in the target repair region.

12. Method according to any one of the preceding claims, comprising a step a) in which the target repair region is divided into a plurality of compartments, then a plurality of cycles of steps b) and c) in order to fill each of said compartments.

13. Method according to any one of the preceding claims, wherein the target filling region is at least partly defined by the floor of the tank.

14. Method according to any one of the preceding claims, said tank containing molten glass, said method comprising the following steps:
1) at least partially draining the molten glass from the tank, in order to expose said target repair region;
2) preferably, rinsing said target repair region;
3) reducing the temperature in the furnace;
4) implementing said steps a) to c);
5) preferably, increasing and maintaining the temperature of the furnace between 900°C and 1400°G so as to sinter the repair product;
6) introducing a glass composition for melting into the tank and increasing the temperature of the furnace to an operating temperature leading to the melting of said composition.

15. Method according to any one of the preceding claims, wherein the repair product is the result of moistening an unshaped product by adding thereto an amount of water of greater than 8%, by mass relative to the mass of said unshaped product.

16. Glass-melting furnace comprising a tank comprising at least one region repaired with a product, preferably a sintered product, having a non-stratified microstructure and
- an open porosity of less than 40%, preferably less than 35%, preferably less than 30%, and/or
- a cold compressive strength of greater than 30 MPa.
